# EUROPEAN PATENT APPLICATION

(11) **EP 3 200 510 A1**
(43) Date of publication of application: **02.08.2017**
(21) Application number: 15843460.5
(22) Date of filing: 18.09.2015
(51) Int. Cl.: H04W 48/18, H04W 16/14, H04W 48/12, H04W 72/04, H04W 88/06

(54) **BASE STATION AND MOBILE STATION**

(30) Priority: 26.09.2014 US 201462056047 P
(71) Applicant: Kyocera Corporation, Kyoto-shi, Kyoto 612-8501 (JP)
(72) Inventor: FUKUTA, Noriyoshi, Kyoto-shi Kyoto 612-8501 (JP); MORITA, Kugo, Kyoto-shi Kyoto 612-8501 (JP); FUJISHIRO, Masato, Kyoto-shi Kyoto 612-8501 (JP); YAMAZAKI, Chiharu, Kyoto-shi Kyoto 612-8501 (JP); MATSUMOTO, Naohisa, Kyoto-shi Kyoto 612-8501 (JP); URABAYASHI, Hiroyuki, Kyoto-shi Kyoto 612-8501 (JP)
(74) Representative: Schwabe - Sandmair - Marx
(86) International application number: PCT/JP2015/076761
(87) International publication number: WO 2016/047628

(57) **Abstract**

A communication control method of a base station (eNB 200) that includes a first cell (L-Cell) operated using a frequency bandwidth allocated to a mobile network operator and a second cell (U-Cell) operated using a specific frequency bandwidth where frequency occupying is not allowed by the mobile network operator, comprising: acquiring, by the base station, a physical cell identifier (PCT) of a peripheral cell operated in the specific frequency bandwidth; and setting, by the base station, the second cell with a physical cell identifier other than the acquired physical cell of the peripheral cell.

## Description

### TECHNICAL FIELD

The present application relates to a base station and a mobile station which are used in a mobile communication system.

### BACKGROUND ART

In the 3GPP (3rd generation partnership project) for standardization of a mobile communication system, the employment of a high speed specification of LTE (Long Term Evolution) is ongoing in order to meet a demand for steeply increasing traffic (for example, see Non Patent Document 1).

On the other hand, applications of an unlicensed band, a license shared band, and a frequency band called a white space have attracted much attention. The unlicensed band is a frequency band which can be used without allowance. The license shared band is a frequency band which can be shared with an existing licensed person while changing time, place, or frequency. The white space is a frequency band allocated to a user who uses the frequency for one purpose such as digital television broadcasting (referred to as a "primary user of the frequency"), but it is a frequency band available for other users who use the frequency for another purpose depending on geographical conditions and technical conditions (referred to as a "secondary user of the frequency").

The unlicensed band and the license shared band are called a specific frequency band.

Here, as one method for meeting the demand for steeply increasing traffic in the mobile communication system, it is considered that the specific frequency band described above is applied to a mobile communication.

### PRIOR ART DOCUMENT

### NON-PATENT DOCUMENT

Non Patent Document 1: 3GPP Technical Specification "TS36.300 V12.0.0" (January 2014)

### SUMMARY

However, the specific frequency band described above is not allowed to the primary user of the frequency by a mobile network operator, and cannot be occupied by one mobile network operator (that is, the unlicensed band). Therefore, it is difficult to apply the specific frequency band to the mobile communication.

It is intended to provide a base station and a mobile station through which the specific frequency band can be applied to the mobile communication.

### BRIEF DESCRIPTION OF DRAWINGS

FIG. 1 is a diagram illustrating a configuration of an LTE system according to a first embodiment to a fourth embodiment;
FIG. 2 is a block diagram of a UE according to the first embodiment to the fourth embodiment;
FIG. 3 is a block diagram of an eNB according to the first embodiment to the fourth embodiment;
FIG. 4 is a protocol stack diagram of a wireless interface according to the first embodiment to the fourth embodiment;
FIG. 5 is a diagram illustrating a configuration of a wireless frame according to the first embodiment to the fourth embodiment;
FIG. 6 is a diagram illustrating configurations of an LTE system and a U-Cell system according to the first embodiment to the fourth embodiment;
FIG. 7 is a sequence diagram according to the first embodiment (searching by a UE);
FIG. 8 is a sequence diagram according to the first embodiment (searching by an eNB);
FIG. 9 is a diagram illustrating the layout of synchronization signals (PSS/SSS/USS) according to the first embodiment;
FIG. 10 is a diagram illustrating the layout of the synchronization signals (PSS/SSS) according to the first embodiment;
FIGS. 11A and 11B are diagrams illustrating configurations of a physical cell identifier according to the first embodiment;
FIG. 12 is a sequence diagram according to the first embodiment (collision detection);
FIG. 13 is a diagram illustrating resource allocation to the UE according to the second embodiment;
FIG. 14 is a sequence diagram according to the second embodiment (HARQ);
FIG. 15 is a sequence diagram according to the second embodiment (RACH transmission);
FIG. 16 is a diagram illustrating resource allocation to the UE according to the third embodiment;
FIG. 17 is a sequence diagram according to the third embodiment (transmission power control);
FIG. 18 is a sequence diagram according to the third embodiment (MCS determination); and
FIG. 19 is a sequence diagram according to the fourth embodiment.
FIG. 20 is a figure according to the appendix.

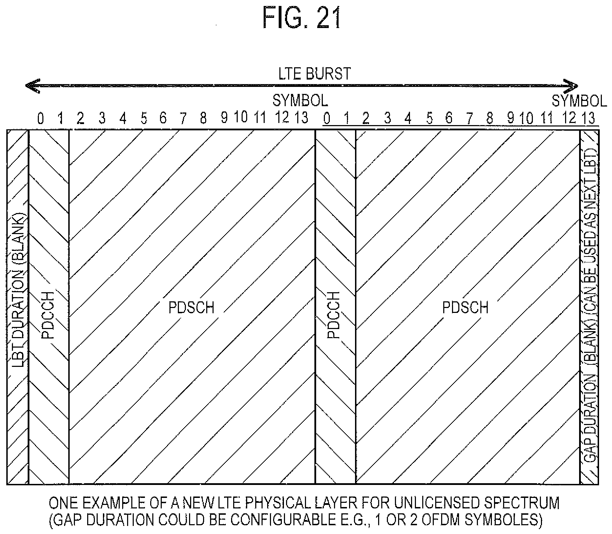

FIG. 21 is a figure according to the appendix.

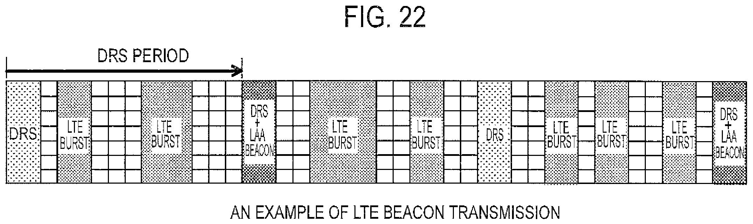

FIG. 22 is a figure according to the appendix.
FIG. 23 is a figure according to the appendix.

### DESCRIPTION OF THE EMBODIMENT

### [Overview of embodiments]

Abase station according to a first embodiment comprises a controller configured to manage a first cell operated using an allocation frequency band allocated by a mobile network operator and a second cell operated using a specific frequency band where occupying a frequency is not allowed by the mobile network operator. The controller set the second cell with a physical cell identifier different from a physical cell identifier of a peripheral cell operated in the specific frequency band.

The controller may acquire the physical cell identifier of the peripheral cell and may set the second cell with a physical cell identifier different from the acquired physical cell identifier.

The controller may acquire the physical cell identifier of the peripheral cell from a mobile station existing in the first cell.

The controller acquires the physical cell identifier of the peripheral cell by searching the peripheral cell by the base station.

A physical cell identifier used for the specific frequency band includes an extended region which is extended compare to a physical cell identifier used for the allocation frequency band. The controller may set the second cell with the physical cell identifier used for the specific frequency band.

A physical cell identifier used for the specific frequency band and a physical cell identifier used for the allocation frequency band are secured individually. The controller may set the second cell with the physical cell identifier used for the specific frequency band.

In response to the controller determining, on the basis of a detection report from a mobile station or on the basis of searching by the base station, that a physical cell identifier set to the second cell and a physical cell identifier of the peripheral cell are overlapped, the controller may reset the second cell with another physical cell identifier.

A mobile station according to the first embodiment comprises a controller configured to perform communication with a base station that manages a first cell operated using an allocation frequency band allocated by a mobile network operator and a second cell operated using a specific frequency band where occupying a frequency is not allowed by the mobile network operator. The controller performs processes of: acquiring a physical cell identifier of a peripheral cell operated in the specific frequency band, and transmitting information based on the acquired physical cell identifier to the base station.

The controller may perform a process of transmitting, in response to an instruction from the base station, a physical cell identifier of the peripheral cell to the base station.

In response to the controller detecting an overlap between a physical cell identifier of the second cell and a physical cell identifier of the peripheral cell, the controller may transmit a detection report indicating the overlap to the base station.

A base station according to the first embodiment comprises a controller configured to manage a first cell operated using an allocation frequency band allocated by a mobile network operator and a second cell operated using a specific frequency band where occupying a frequency is not allowed by the mobile network operator. The controller performs processes of transmitting a synchronization signal used for the allocation frequency band through the first cell, and transmitting a synchronization signal used for the specific frequency band through the second cell. A signal configuration of the synchronization signal used for the specific frequency band is different from a signal configuration of the signal used for the allocation frequency band.

The synchronization signal used for the allocation frequency band consists a first synchronization signal and a second synchronization signal. The synchronization signal used for the specific frequency band may include the first synchronization signal, the second synchronization signal and a specific synchronization signal used dedicated for the specific frequency band.

A predetermined resource arrangement pattern is applied to the synchronization signal used for the allocation frequency band. A resource arrangement pattern different from the predetermined resource arrangement pattern is applied to the synchronization signal used for the specific frequency band.

A mobile station according to the first embodiment comprises a controller configured to perform communication with a base station that manages a first cell operated using an allocation frequency band allocated by a mobile network operator and a second cell operated using a specific frequency band where occupying a frequency is not allowed by the mobile network operator. A signal configuration of the synchronization signal used for the specific frequency band is different from a signal configuration of the signal used for the allocation frequency band. The controller specifies a synchronization signal of the second cell on the basis of the difference of the signal configurations.

A base station according to a second embodiment comprises a controller configured to manage a first cell operated using an allocation frequency band allocated by a mobile network operator and a second cell operated using a specific frequency band where occupying a frequency is not allowed by the mobile network operator. The controller allocates a plurality of component carriers included in the specific frequency band to a mobile station. The controller performs communication with the mobile station while switching a component carrier used in a communication with the mobile station in the second cell, with a predetermined hopping pattern.

The controller may notify, through the first cell, the mobile station of the plurality of component carriers allocated to the mobile station and the predetermined hopping pattern.

After the controller notifies the mobile station of a virtual component carrier number as configuration information of a component carrier allocated to the mobile station, the controller may notify the mobile station of an association between the virtual component carrier number and a component carrier that is actually used in a communication with the mobile station.

The virtual component carrier number is associated with a retransmission control process. The controller may continue the retransmission control process associated with the virtual component carrier number even if the controller changes the component carrier that is actually used.

A mobile station according to the second embodiment comprises a controller configured to perform communication with a base station that manages a first cell operated using an allocation frequency band allocated by a mobile network operator and a second cell operated using a specific frequency band where occupying a frequency is not allowed by the mobile network operator. When a plurality of component carriers included in the specific frequency band are allocated to the mobile station, the controller performs communication with the base station while switching a component carrier used in a communication with the base station in the second cell, with a predetermined hopping pattern.

A base station according to a third embodiment comprises a controller configured to manage a first cell operated using an allocation frequency band allocated by a mobile network operator and a second cell operated using a specific frequency band where occupying a frequency is not allowed by the mobile network operator. The controller performs processes of: transmitting to a mobile station through the first cell, an instruction signal that instructs transmission of a random access preamble through the second cell; and notifying the mobile station, an offset value of uplink transmission timing used in a communication in the second cell, on the basis of the random access preamble received from the mobile station through the second cell.

The controller may instruct the mobile station an uplink transmission power used in the communication in the second cell, at a time when notifying the mobile station of the offset value of uplink transmission timing.

A mobile station according to the third embodiment comprises a controller configured to perform communication with a base station that manages a first cell operated using an allocation frequency band allocated by a mobile network operator and a second cell operated using a specific frequency band where occupying a frequency is not allowed by the mobile network operator. The controller performs processes of: in response to receiving, an instruction signal that instructs transmission of a random access preamble through the second cell, through the first cell, transmitting the random access preamble through the second cell; and receiving, from the base station, an offset value of uplink transmission timing used in a communication in the second cell.

A mobile station according to the third embodiment comprises a controller configured to perform communication with a base station that manages a first cell operated using an allocation frequency band allocated by a mobile network operator and a second cell operated using a specific frequency band where occupying a frequency is not allowed by the mobile network operator. in response to receiving from the base station, a measurement instruction of a reference signal transmitted through the second cell, the controller estimates a path loss between the base station and the mobile station on the basis of the reference signal, and determines an uplink transmission power used in a communication in the second cell on the basis of the path loss.

A base station according to the third embodiment comprises: a controller configured to manage a first cell operated using an allocation frequency band allocated by a mobile network operator and a second cell operated using a specific frequency band where occupying a frequency is not allowed by the mobile network operator. The controller performs processes of: transmitting to a mobile station, a measurement instruction of a reference signal transmitted through the second cell, in response to receiving a measurement result of the reference signal from the mobile station, determining, on the basis of the reception result, an uplink modulation and coding scheme used in a communication in the second cell.

A base station according to a fourth embodiment comprises a controller configured to manage a first cell operated using an allocation frequency band allocated by a mobile network operator and a second cell operated using a specific frequency band where occupying a frequency is not allowed by the mobile network operator. During a predetermined time period from the end of data transmission to a mobile station in the second cell to performing transmission of reference signal, the controller stops transmission in the second cell and monitors interruption of other apparatuses in the specific frequency band.

### [First embodiment]

Hereinafter, an embodiment of a case where the application is applied to an LTE system will be described

### (LTE system configuration)

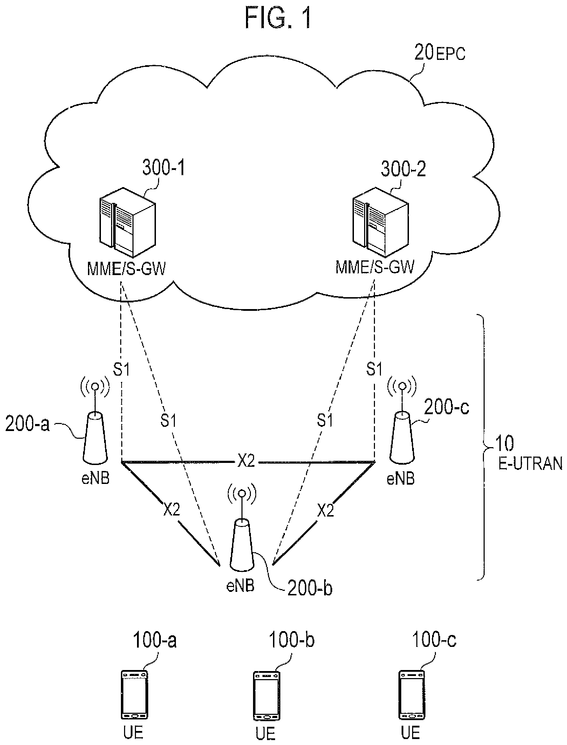

FIG. 1 is a configuration diagram of an LTE system according to a first embodiment. As illustrated in FIG. 1, the LTE system according to the first embodiment includes User Equipment (UE) 100, an Evolved-UMTS Terrestrial Radio Access Network (E-UTRAN) 10, and an Evolved Packet Core (EPC) 20.

The UE 100 corresponds to a mobile station. The UE 100 is a mobile communication device and performs radio communication with a cell (serving cell) of connection destination. The configuration of the UE 100 will be described below.

The E-UTRAN 10 corresponds to a radio access network. The E-UTRAN 10 includes evolved Node-Bs (eNBs) 200. The eNB 200 corresponds to a base station. The eNBs 200 are connected to each other through an X2 interface. The configuration of the eNB 200 will be described below.

The eNB 200 manages one or plural cells and performs radio communication with the UE 100 that establishes a connection with a cell of the eNB 200. The eNB 200 has, for example, a radio resource management (RRM) function, a routing function of user data, and a measurement control function for mobility control and scheduling. The "cell" is used as a term indicating a minimum unit of a radio communication area and is also used as a term indicating a function or resources of performing radio communication with the UE 100.

The EPC 20 corresponds to a core network. A network of the LTE system is configured by the E-UTRAN 10 and the EPC 20. The EPC 20 includes Mobility Management Entity (MME)/Serving-Gateway (S-GW) 300. The MME performs, for example, various mobility controls on the UE 100. The SGW performs transfer control of user data. The MME/S-GW 300 is connected to the eNB 200 through an S1 interface.

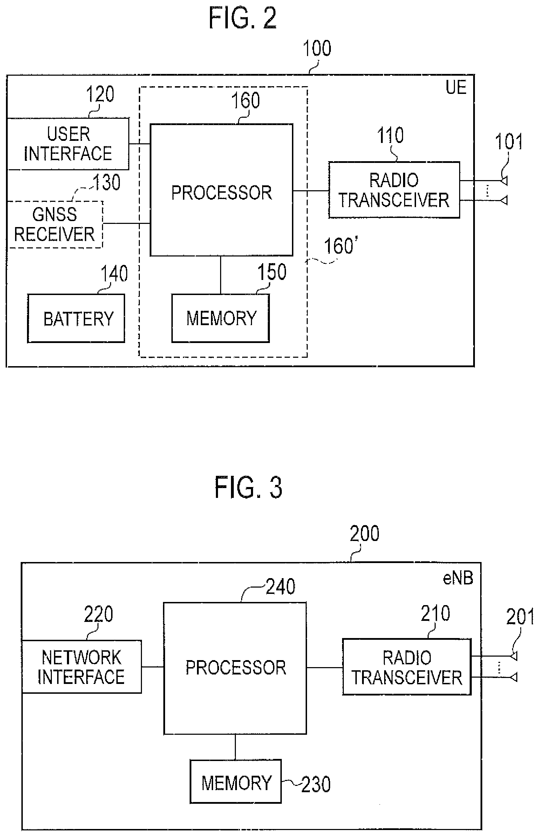

FIG. 2 is a block diagram of the UE 100. As illustrated in FIG. 2, the UE 100 includes plural antennas 101, a radio transceiver 110, a user interface 120, a Global Navigation Satellite System (GNSS) receiver 130, a battery 140, a memory 150, and a processor 160. The memory 150 corresponds to a storage, and the processor 160 corresponds to a controller. The UE 100 may not include the GNSS receiver 130. In addition, the memory 150 may be integrally formed with the processor 160, and this integrated set (that is, chipset) may be called a processor 160'.

The antennas 101 and the radio transceiver 110 are used to transmit and receive a radio signal. The radio transceiver 110 converts a baseband signal (transmission signal) output from the processor 160 into the radio signal, and transmits the radio signal from the antenna 101. Furthermore, the radio transceiver 110 converts the radio signal received by the antenna 101 into the baseband signal (reception signal), and outputs the baseband signal to the processor 160.

The user interface 120 is an interface with a user carrying the UE 100, and includes, for example, a display, a microphone, a speaker, and various buttons. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates power to be supplied to each block of the UE 100.

The memory 150 stores a program to be executed by the processor 160 and information to be used for a process by the processor 160. The processor 160 includes a baseband processor that performs modulation and demodulation, encoding and decoding and the like of the baseband signal, and a Central Processing Unit (CPU) that performs various processes by executing the program stored in the memory 150. The processor 160 may further include a codec that performs encoding and decoding of sound and video signals. The processor 160 implements various processes and various communication protocols described later.

FIG. 3 is a block diagram of the eNB 200. As illustrated in FIG. 3, the eNB 200 includes antennas 201, a radio transceiver 210, a network interface 220, a memory 230, and a processor 240. The memory corresponds to a memory unit. The processor 240 corresponds to a controller. The controller may be constituted by the memory 230 and the processor 240.

The antennas 201 and the radio transceiver 210 are used to transmit and receive a radio signal. The radio transceiver 210 converts the baseband signal (transmission signal) output from the processor 240 into the radio signal, and transmits the radio signal from the antenna 201. Furthermore, the radio transceiver 210 converts the radio signal received by the antenna 201 into the baseband signal (reception signal), and outputs the baseband signal to the processor 240.

The network interface 220 is connected to the adjacent eNB 200 through the X2 interface and is connected to the MME/S-GW 300 through the S1 interface. The network interface 220 is used in communication performed on the X2 interface and communication performed on the S1 interface.

The memory 230 stores a program to be executed by the processor 240 and information to be used for a process by the processor 240. The processor 240 includes the baseband processor that performs modulation and demodulation, encoding and decoding and the like of the baseband signal and a CPU that performs various processes by executing the program stored in the memory 230. The processor 240 implements various processes and various communication protocols described later.

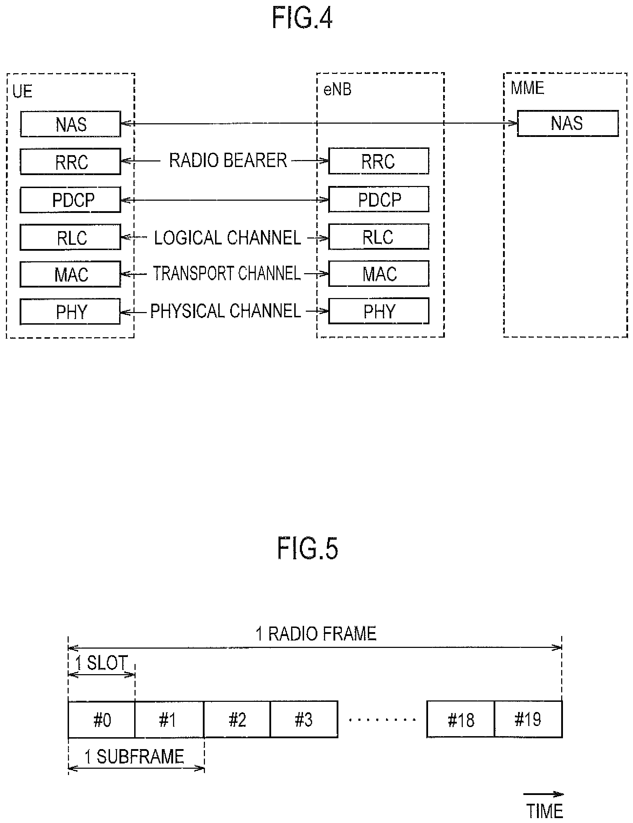

FIG. 4 is a protocol stack diagram of a radio interface in the LTE system. As illustrated in FIG. 4, a radio interface protocol is classified into a first layer to a third layer of an OSI reference model, wherein the first layer is a physical (PHY) layer. The second layer includes a Medium Access Control (MAC) layer, a Radio Link Control (RLC) layer, and a Packet Data Convergence Protocol (PDCP) layer. The third layer includes a Radio Resource Control (RRC) layer.

The physical layer performs encoding and decoding, modulation and demodulation, antenna mapping and demapping, and resource mapping and demapping. Between the physical layer of the UE 100 and the physical layer of the eNB 200, user data and control signals are transmitted through a physical channel.

The MAC layer performs preferential control of data, and a retransmission process and the like by hybrid ARQ (HARQ). Between the MAC layer of the UE 100 and the MAC layer of the eNB 200, user data and control signals are transmitted through a transport channel. The MAC layer of the eNB 200 includes a transport format of an uplink and a downlink (a transport block size and a modulation and encoding scheme) and a scheduler for determining (scheduling) a resource block to be assigned to the UE 100.

The RLC layer transmits data to an RLC layer of a reception side using the functions of the MAC layer and the physical layer. Between the RLC layer of the UE 100 and the RLC layer of the eNB 200, user data and control signals are transmitted through a logical channel.

The PDCP layer performs header compression and decompression, and encryption and decryption.

The RRC layer is defined only in a control plane that handles control signals. Between the RRC layer of the UE 100 and the RRC layer of the eNB 200, control signals (RRC message) for various types of setting are transmitted. The RRC layer controls the logical channel, the transport channel, and the physical channel in response to establishment, reestablishment, and release of a radio bearer. When a connection (RRC connection) is established between the RRC of the UE 100 and the RRC of the eNB 200, the UE 100 is in a connected state (RRC connected state), and when the RRC connection is not established, the UE 100 is in an idle state (RRC idle state).

A Non-Access Stratum (NAS) layer positioned at an upper level of the RRC layer performs session management and mobility management,

FIG. 5 is a configuration diagram of a radio frame used in the LTE system. In the LTE system, Orthogonal Frequency Division Multiple Access (OFDMA) is employed in a downlink (DL), and Single Carrier Frequency Division Multiple Access (SC-FDMA) is employed in an uplink (UL), respectively.

As illustrated in FIG. 5, the radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. Each of the resource blocks includes a plurality of subcarriers in the frequency direction. A resource element is configured by one subcarrier and one symbol.

Among the radio resources assigned to the UE 100, the frequency resource is configured by a resource block, and a time resource is configured by a subframe (or slot).

In the downlink, an interval of several symbols at the head of each subframe is a region mainly used as a physical downlink control channel (PDCCH) for transmission of a downlink control signal. Furthermore, the remaining part of each subframe is a region mainly used as a physical downlink shared channel (PDSCH) for transmission of a downlink user data.

In the uplink, both end portions in the frequency direction of each subframe are regions mainly used as a physical uplink control channel (PUCCH) for transmission of an uplink control signal. The remain portion of each subframe is a region that can be mainly used as a physical uplink shared channel (PUSCH) for transmission of an uplink user data.

### (Cell Identifier)

In the LTE system, a cell identifier for identifying a cell is assigned to each cell. The cell identifier includes a physical cell identifier (PCI), a cell global identifier (ECGI), and the like. The ECGI is configured by an MCC, an MNC, and an ECI. The ECI is configured by a combination of the PCI and an eNB identifier.

The PCI is configured by 8 bits, and mainly used in the physical layer. The number of PCIs defined in the specifications is 504. Further, 504 signal sequences of a cell-specific reference signal (CRS) are prepared, and the signal sequences are associated with PCIs. The PCIs are divided into 168 cell ID groups and three cell IDs are included in each cell ID group (168×3=504).

In a cell search, the UE 100 specifies the PCI of a cell by a primary synchronization signal (PSS) and a secondary synchronization signal (SSS) which are received from the cell. Specifically, a value of the PSS is associated with (three) cell IDs in a cell ID group, a value of the SSS is associated with (168) cell ID groups, and the PCI is specified by a combination of the PSS and the SSS. Further, the PSS and the SSS provide a downlink frame level synchronization.

The UE 100 receives the CRS on the basis of the PCI after specifying the PCI of the cell by the combination of the PSS and the SSS. The CRS provides downlink symbol synchronization and frequency synchronization. The CRS is provided in a first OFDM symbol and a third-to-last OFDM symbol in a slot at six subcarrier intervals. Further, CRSs are divided into six frequency shift groups (CRS frequency shift group) depending on the PCI.

It is noted that the ECGI is broadcast from the cell by a system information block (SIB) that is exchanged in the RRC layer.

### (System Configuration using Specific Frequency band)

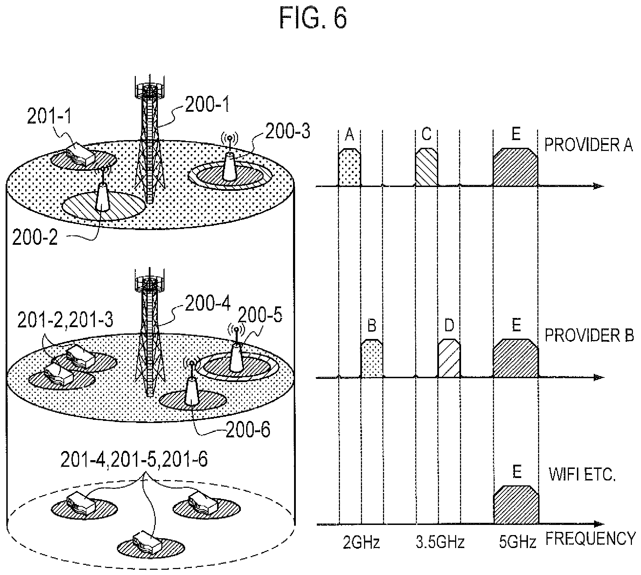

A system configuration in a case where a mobile network operator uses a specific frequency band will be described using FIG. 6.

FIG. 6 is a diagram illustrating a system configuration when the mobile network operators (a provider A and a provider B) and a WLAN (WiFi or the like) share a 5 GHz specific frequency band.

The provider A, the provider B, and the WLAN share a 5 GHz unlicensed band E.

The provider A provides a communication service using licensed bands A and C which can be occupied by the provider A and the unlicensed band E which cannot be occupied by the provider A.

The provider B provides the communication service using licensed bands B and D which can be occupied by the provider B and the unlicensed band E which cannot be occupied by the provider B.

The unlicensed band E is used even when the communication is performed using a public wireless LAN or using the WLAN by a person.

For example, the provider A provides a service using the licensed band A at an eNB 200-1, the licensed band C at an eNB 200-2, and the licensed band C and the unlicensed band E at an eNB 200-3. In addition, the provider A may provide the service using the unlicensed band E at a WLAN access point 201-1.

In addition, the provider B provides a service using the licensed band B at an eNB 200-4, the licensed band D and the unlicensed band E at an eNB 200-5, and the unlicensed band E at an eNB 200-6. In addition, the provider B may provide the service using the unlicensed band E at WLAN access points (201-2, 201-3).

Besides the provider A and the provider B, the unlicensed band E is used for a public wireless LAN provider and WLAN access points (201-4, 201-5, 201-5) provided by a person.

In the example of FIG. 6, the service is provided simultaneously using the licensed band and the unlicensed band at the eNB 200-3 and the eNB 200-5. The eNB 200-3 and the eNB 200-5 form a licensed cell (L-Cell) and an unlicensed cell (U-Cell) using the licensed band.

### (PCI Setting of U-Cell)

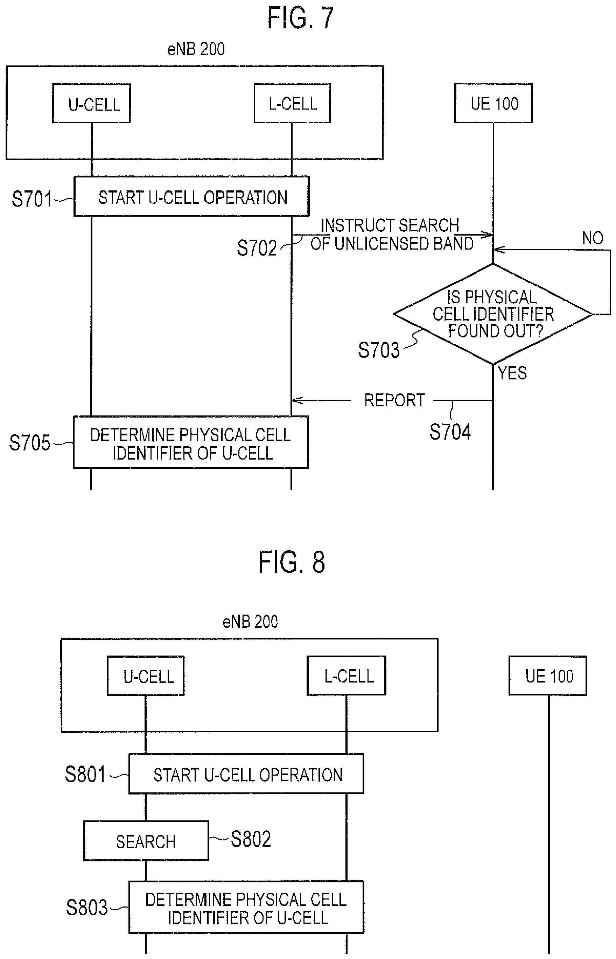

A method of setting the PCI of the U-Cell will be described using FIGS. 7 to 11B.

A communication control method in this embodiment is a communication control method of an eNB 200 that includes a first cell (L-Cell) operated using an allocation frequency band (a licensed band) allocated to a mobile network operator and a second cell (U-Cell) operated using a specific frequency band (an unlicensed band) where occupying a frequency is not allowed by the mobile network operator. The communication control methods includes: acquiring, by the eNB 200, a physical cell identifier (PCI) of a peripheral cell operated in the specific frequency band; and setting, by the eNB 200, the second cell (U-Cell) with a physical cell identifier different from the acquired physical cell of the peripheral cell.

Here, in the acquiring described above, the eNB 200 may acquire the physical cell identifier of the peripheral cell from a UE 100 located in an area of the first cell (L-Cell).

An operation of the eNB 200 to acquire the PCI of the peripheral cell from the UE 100 located in the area of the L-Cell will be described using FIG. 7.

In Step S701, the eNB 200 determines the operation start of the U-Cell.

In Step S702, the eNB 200 determining the operation start of the U-Cell instructs, through the L-Cell, the UE 100 to search the unlicensed band.

In Step S703, the UE 100 receiving a command of searching the unlicensed band searches the unlicensed band.

In a case where the PCI of the peripheral U-Cell can be found out (Step S703: Yes), in step S704, the UE 100 reports the search result of the unlicensed band to the eNB 200. Here, the UE 100 does not report the search result to the eNB 200 in a case where the PCI of the peripheral U-Cell cannot be found out.

In Step S705, the eNB 200 receiving the report on the PCI of the peripheral U-Cell sets a PCI different from the PCI of the peripheral U-Cell to the U-Cell which starts the operation.

In addition, in the acquiring described above, the eNB 200 may acquire the physical cell identifier of the peripheral cell by searching the peripheral cell.

An operation of the eNB 200 to acquire the PCI of the peripheral cell will be described using FIG. 8.

In Step S801, the eNB 200 determines an operation start of the U-Cell.

In Step S802, the eNB 200 searches the unlicensed band.

In Step S803, the eNB 200 acquiring the PCI of the peripheral U-Cell as a result of the searching sets a PCI different from the PCI of the peripheral U-Cell to the U-Cell which starts the operation.

Here, regarding the PCI of the U-Cell, an region for identifying the U-Cell may be added to a PCI format (general PCI format) which is used in the L-Cell.

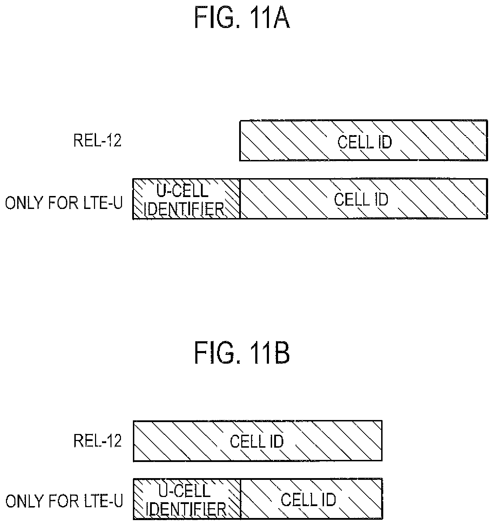

An example of the PCI format of the U-Cell is illustrated in FIG. 11A. The upper portion of FIG. 11A is the PCI format which is used in the L-Cell of Release 12. The lower portion of FIG. 11A is an example of the PCI format which is used in the U-Cell. In this format, a U-Cell identifier is added to identify the U-Cell. Specifically, a physical cell identifier used for the specific frequency band (unlicensed band) includes an extended region which is extended compare to a physical cell identifier used for the allocation frequency band (licensed band). the eNB 200 set the U-Cell with the physical cell identifier used for the specific frequency band.

### (PCI Detection of U-Cell)

The eNB 200 transmits a synchronization signal used for the allocation frequency band (licensed band) through the first cell (L-Cell), and transmits a synchronization signal used for the specific frequency band (unlicensed band) through the second cell (U-Cell). A signal configuration of the synchronization signal used for the specific frequency band is different from a signal configuration of the signal used for the allocation frequency band. The UE 100 specifies a synchronization signal of the second cell on the basis of the difference of the signal configurations.

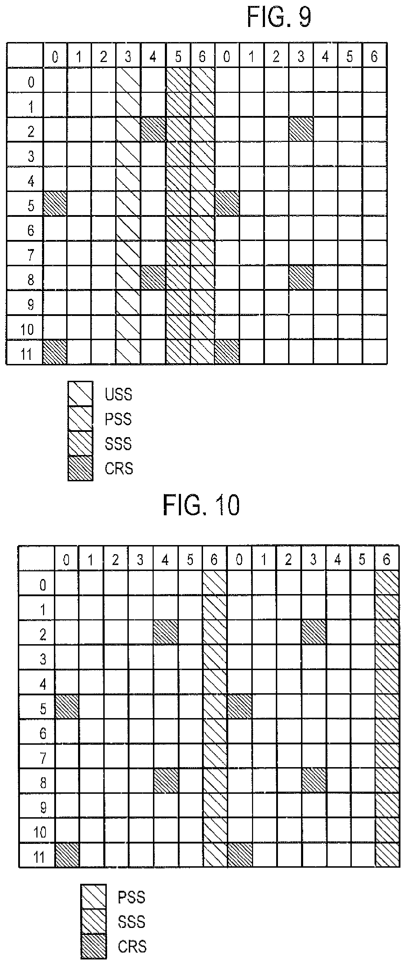

The synchronization signal used for the allocation frequency band consists a first synchronization signal (PSS: Primary Synchronization Signal) and a second synchronization signal (SSS: Secondary Synchronization Signal). By contrast, the synchronization signal used for the specific frequency band includes the first synchronization signal, the second synchronization signal and a specific synchronization signal used dedicated for the specific frequency band (See Fig. 9).

Alternatively, a predetermined resource arrangement pattern may be applied to the synchronization signal used for the allocation frequency band, and a resource arrangement pattern different from the predetermined resource arrangement pattern may be applied to the synchronization signal used for the specific frequency band. For example, PSS/SSS used for the specific frequency band are arranged in different location (frequency location or time location) than that in PSS/SSS used for the allocation frequency band

The communication control method of this embodiment may include: receiving, by the UE 100, a primary synchronization signal (PSS) and a secondary synchronization signal (SSS) through the U-Cell from the eNB 200, the primary synchronization signal and the secondary synchronization signal being used in both of the L-Cell and the U-Cell, and receiving a specific synchronization signal (USS) for the specific frequency band (the unlicensed band); and specifying, by the UE 100, the U-Cell based on the received primary synchronization signal and the received secondary synchronization signal.

Specifically, it is defined the USS (U-Cell specific Synchronization Signal) for the U-Cell in addition to the PSS and the SSS which are used as the synchronization signals in the LTE. The UE 100 specifies the PCI of the U-Cell based on the PSS, the SSS, and the USS.

FIG. 9 illustrates an example of the layout of the USS. In FIG. 9, the vertical direction is the frequency direction and the horizontal direction is the time direction. The USS is disposed in addition to the PSS, the SSS, and a cell specific reference signal (CRS). The USS is disposed in subcarriers #0 to #11 of the unlicensed band in a predetermined subframe.

The USS is a synchronization signal to be used only on the U-Cell. When the USS is specified, a sequence number of an orthogonal code sequence (for example, Zadoff-chu sequence) can be uniquely determined.

The USS may indicate a public land mobile network (PLMN) identifier, or may indicate a mobile network code (MNC).

An interval (offset) between the PSS/SSS and the USS may be fixed, or may be arbitrarily set. In a case where the interval is arbitrarily set, the interval (offset) may be notified through the L-Cell from the eNB 200.

The PSS, the SSS, the CRS, and the USS may be called a discovery reference signal (DRS) for the U-Cell. The DRS may further include a Channel State Information-Reference Signal (CSI-RS).

In addition, the communication control method of this embodiment may include: receiving, by the UE 100, a primary synchronization signal (PSS) and a secondary synchronization signal (SSS) through the U-Cell from the eNB 200, the primary synchronization signal and the secondary synchronization signal being used in both of the L-Cell and the U-Cell; receiving, by the UE 100, an interval between the primary synchronization signal and the secondary synchronization signal through the L-Cell from the eNB 200; and specifying, by the UE 100, the U-Cell based on the received primary synchronization signal, the received secondary synchronization signal, and the interval.

In this embodiment, the PCI of the U-Cell is specified based on the PSS, the SSS, and the interval by changing the interval (offset) between the PSS and the SSS. Further, the PLMN identifier and MNC may be specified by the interval.

The description has been made about an example where an area for identifying the U-Cell is added to the PCI format used in the L-Cell as the PCI format of the U-Cell, but a range for setting the PCI of the L-Cell and a range for setting the PCI to be allocated to the U-Cell may be separately provided. That is, the PCI used for the specific frequency band and the PCI used for the allocation frequency band are secured individually. The eNB 200 set the U-Cell with the PCT used for the specific frequency band.

An example of the PCI format of the U-Cell in this case is illustrated in FIG. 11B. The upper portion of FIG. 11B illustrates the PCI format which is used in the L-Cell of Release 12. The lower portion of FIG. 11B illustrates the PCI format which is used in the U-Cell. In the format, a U-Cell identifier is provided in a portion of the existing PCI format in order to identify the U-Cell. The PCI can be set in each of the L-Cell and the U-Cell by dividing the range of the PCI which can be set in the L-Cell and the U-Cell.

As another embodiment, there is provided a communication control method between a UE 100 and an eNB 200 that includes a first cell (L-Cell) operated using a frequency band allocated to a mobile network operator and a second cell (U-Cell) operated using a specific frequency band where occupying a frequency is not allowed by the mobile network operator,, including: setting, by the eNB 200, a physical cell identifier (PCI) to the U-Cell and starting an operation; detecting, by the eNB 200 or the UE 100, whether the PCI set to the U-Cell and a PCI of a peripheral cell are overlapped; and resetting, by the eNB 200, the U-Cell to another physical cell identifier in a case where the PCI is overlapped between the U-Cell and the peripheral cell.

In this embodiment, the eNB 200 is configured to reset the PCI in a case where the PCI is overlapped between the operating U-Cell and the peripheral cell.

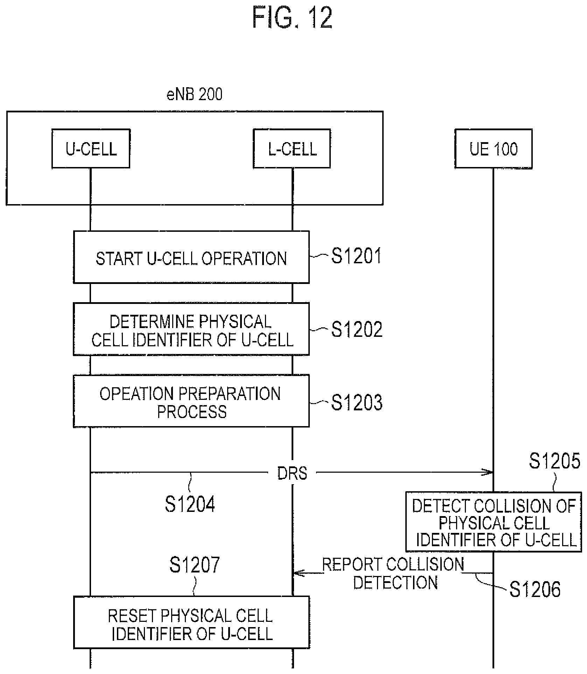

The operation will be specifically described using FIG. 12.

In Step S1201, the eNB 200 determines to start the operation of the U-Cell.

In Step S1202, the eNB 200 determining the operation start of the U-Cell determines the physical cell identifier of the U-Cell. The eNB 200 may randomly determine the physical cell identifier of the U-cell.

In Step S1203, the eNB 200 performs an operation preparation process of the U-Cell.

In Step S1204, the eNB 200 starts the operation of the U-Cell. Specifically, the transmission of the DRS is started.

In Step S1205, the UE 100 receives the DRS of the U-Cell, and detects whether the PCI of the U-Cell is overlapped with the PCI of the peripheral cell.

In Step S1206, the UE 100 transmits a collision detection report through the L-Cell to the eNB 200.

In Step S1207, the eNB 200 receiving the collision detection report from the UE 100 resets the PCI of the U-Cell. The eNB 200 may randomly determine the physical cell identifier of the U-cell.

Therefore, even in a case where the PCI is overlapped, the PCI collision can be overcome by resetting the PCI of the U-Cell.

### (Others)

The sequence at the time of the PCI collision illustrated in FIG. 12 can also applied to a resetting operation in a case where the DRSs are collided between the cells.

In addition, even in a case where the PCI is overlapped between the U-Cell and the peripheral cell, the UE 100 may change its own transmission timing (for example, a rough position in a unit of subframe) such as a position of a synchronization signal, a broadcast channel, or a data channel in order to specify the U-Cell.

In this case, it is necessary that the transmission timing of the peripheral cell is searched by the subject eNB 200 or the search result of the UE 100 is acquired, and the transmission timing is set not to be overlapped with that of the peripheral cell. In addition, in a case where the transmission timing is periodical in the U-Cell and the peripheral cell, it is desirable that the period be equal or the period of the transmission timing of the U-Cell be N times the transmission timing of the peripheral cell (N is an arbitrary integer).

### [Second Embodiment]

Next, a second embodiment will be described. The same portion as that of the first embodiment will not be described, and only a difference will be described.

### (Hopping between Component Carriers)

The eNB 200 according to this embodiment allocates a plurality of component carriers included in the specific frequency band to the UE 100, and performs communication with the UE 100 while switching a component carrier used in a communication with the UE 100 in the second cell, with a predetermined hopping pattern. The eNB 200 notifies, through the first cell, the UE 100 of the plurality of component carriers allocated to the UE 100 and the predetermined hopping pattern. When a plurality of component carriers included in the specific frequency band are allocated to the UE 100, the UE 100 performs communication with the eNB 200 while switching a component carrier used in a communication with the eNB 200 in the second cell, with a predetermined hopping pattern.

The eNB 200 is configured to use the specific frequency bandwidth by dividing the specific frequency bandwidth into a plurality of component carriers. The communication control method includes: notifying, by the eNB 200, the component carrier on the second cell to be used by the UE 100 through the first cell and a hopping pattern between the plurality of component carriers to the UE 100; and transmitting or receiving, by the UE 100, data on the second cell using the component carrier notified from the eNB 200.

In a case where two or more component carriers (CC) can be used on the U-Cell, a frequency diversity effect is obtained, so that frequency hopping of the data channel can be made between the component carriers.

As a time period for performing the frequency hopping, a unit of subframe or a unit of slot is desirable.

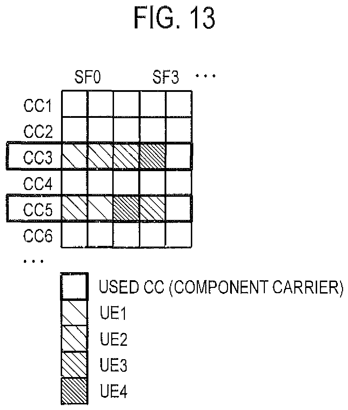

FIG. 13 illustrates an exemplary allocation of the component carriers when the frequency hopping is performed between the component carriers.

For example, a UE 100-1 is allocated with CC #3 in Subframe (SF) #0, and CC #5 in Subframe #1.

In addition, for example, a UE 100-3 is allocated with CC #3 in Subframe #2, and CC #5 in Subframe #3.

When the frequency hopping is applied, the eNB 200 notifies a combination of the component carriers used in the U-Cell in a predetermined time period to the UE 100. In addition, the eNB 200 notifies information indicating whether the frequency hopping is applied to the UE 100. The notification is desirably included in resource allocation information for the data transmission.

The UE 100 specifies the component carrier to be used in the predetermined time period using the acquired information, and performs transmission/reception of data.

### (Retransmission Control)

After the eNB 200 notifies the UE 100 of a virtual component carrier number as configuration information of a component carrier allocated to the mobile station, the eNB 200 notifies the UE 100 of an association between the virtual component carrier number and a component carrier that is actually used in a communication with the mobile station.
the virtual component carrier number is associated with a retransmission control process. The eNB 200 continues the retransmission control process associated with the virtual component carrier number even if the eNB changes the component carrier that is actually used.

A communication control method in this embodiment includes: notifying, by the eNB 200, setting information of the plurality of component carriers through the first cell; notifying, by the eNB 200, the component carrier that is used by the UE 100 for transmitting or receiving data; and activating, by the UE 100, a retransmission data waiting timer in a case where the UE 100 fails to receive the data on the component carrier. The UE 100 receives retransmission data through any one of the plurality of component carriers while the retransmission data waiting timer is activated.

Here, in the notifying of the setting information, the eNB 200 may notify a virtual number of the plurality of component carriers to the UE 100, and in the notifying of the component carrier to be used in transmitting or receiving the data, the eNB 200 may notify an association between the virtual number and the actually used component carrier to the UE 100.

Since the component carrier on the unlicensed band is not in the frequency band allocated to the mobile network operator, the component carrier may become unusable during the communication between the UE 100 and the eNB 200. Therefore, in order to enable the process of the retransmission control (HARQ control) to be continuously usable on the unlicensed band, it is necessary that the HARQ control is kept continuous on another component carrier even when the component carrier during the communication becomes unusable.

Specifically, the above problem can be solved through that the eNB 200 transmits retransmission data through the usable component carrier and the UE 100 receives the retransmission data through any one of the component carriers on the unlicensed band.

Here, in order to avoid that the HARQ process number on the L-Cell and the HARQ process number on the U-Cell are mixed, the UE 100 cannot receive data on the component carrier of the unlicensed band, and in a case where the retransmission becomes necessary, the retransmission is performed using the component carrier of the unlicensed band, and the retransmission is not performed using the component carrier on the licensed band.

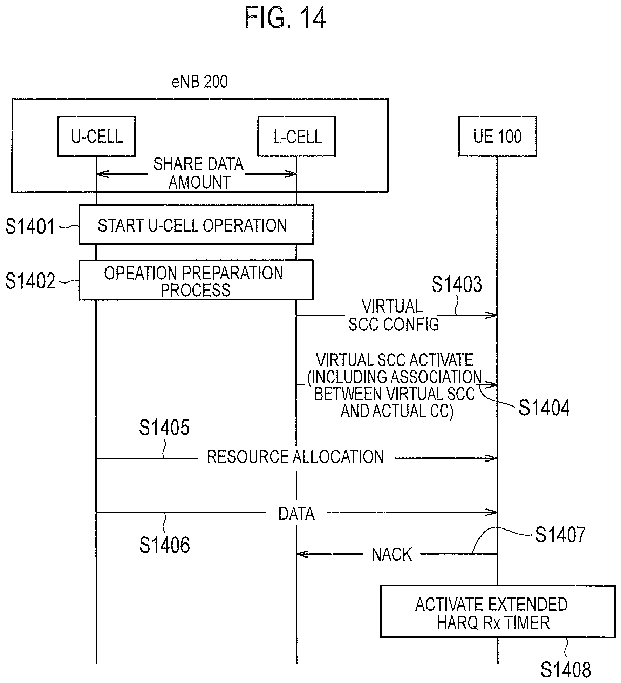

The sequence according to this embodiment will be described using FIG. 14.

In Step S1401, the eNB 200 determines the operation start of the U-Cell.

In Step S1402, the eNB 200 performs an operation start preparation process of the U-Cell.

In Step S1403, the eNB 200 notifies a virtual SCC Config (the setting information of the component carrier on the unlicensed band) to the UE 100. In the virtual SCC Config, the setting information for receiving broadcast information on the unlicensed band is included, but a frequency of the component carrier used for transmitting or receiving the data is not designated.

In Step S1404, the eNB 200 notifies the component carrier used for transmitting or receiving the data to the UE 100 (SCC Activate). Here, the SCC Activate includes information in which the virtual SCC Config and the component carrier used for transmitting or receiving the data are associated.

In Step S1405, the eNB 200 performs the resource allocation on the component carrier on the unlicensed band with respect to the UE 100.

In Step S1406, the eNB 200 transmits the data to the UE 100.

In Step S1407, when failing to receive the data from the eNB 200, the UE 100 transmits a Nack signal to the eNB 200.

In Step S1408, the UE 100 activates an extended HARQ Rx timer when the Nack signal is transmitted, and receives the retransmission data through any one of the plurality of component carriers on the unlicensed band during the activation of the HARQ Rx timer.

Here, Step S1403 and Step S1404 may be simultaneously implemented.

FIG. 14 illustrates the retransmission of downlink data, and the retransmission of uplink data is also the same.

In addition, the extended HARQ Rx timer has the same function as the HARQ Rx timer of the LTE. However, the extended HARQ Rx timer can be set to a time (a timer value) longer than the HARQ Rx timer of the LTE in consideration of a time necessary for securing bandwidth on the unlicensed band.

### [Third Embodiment]

Next, a third embodiment will be described. The same portion as those of the first embodiment and the second embodiment will not be described, and only a difference will be described.

### (Timing Adjustment of Uplink Data)

An eNB 200 according to this embodiment performs processes of: transmitting to a UE 100 through a first cell (L-Cell), an instruction signal that instructs transmission of a random access preamble through a second cell (U-Cell); and notifying the UE 100, an offset value of uplink transmission timing used in a communication in the second cell, on the basis of the random access preamble received from the UE 100 through the second cell. The eNB 200 my instruct the UE 100 an uplink transmission power used in the communication in the second cell, at a time when notifying the UE 100 of the offset value of uplink transmission timing.

The UE 100 performs processes of: in response to receiving, an instruction signal that instructs transmission of a random access preamble through the second cell (U-Cell), through the first cell (L-Cell), transmitting the random access preamble through the second cell; and receiving, from the eNB 200, an offset value of uplink transmission timing used in a communication in the second cell.

A communication control method in this embodiment includes: transmitting, by the eNB 200 through the first cell to the UE 100, a command signal that instructs the UE 100 to transmit a random access preamble to the eNB 200 through the second cell and a transmission time of the random access preamble; searching, by the UE 100, the second cell according to the reception of the command signal; transmitting, by the UE 100, the random access preamble through the second cell to the eNB 200 at the transmission time instructed by the command signal in a case where the second cell is not detectable as a result of the searching; calculating, by the eNB 200, a timing offset value used in transmitting uplink data through the second cell based on timing when the random access preamble is received; and notifying, by the eNB 200, the timing offset value to the UE 100. When the timing offset value is notified to the UE 100, the eNB 200 may instruct the UE 100 with transmission power at the time of transmitting the uplink data.

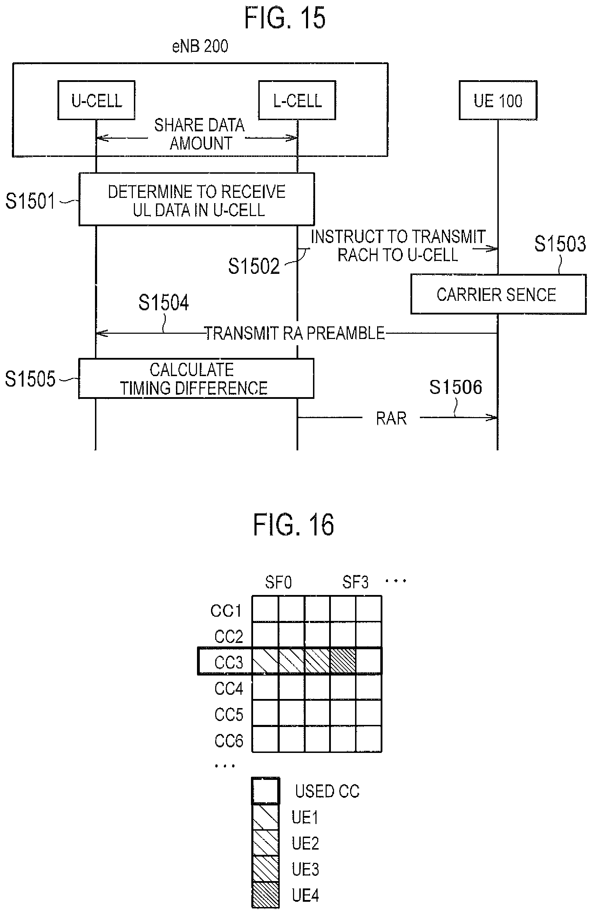

The sequence according to this embodiment will be described using FIG. 15.

In Step S1501, the eNB 200 determines that the uplink data (UL data) from the UE 100 is received in the U-Cell.

In Step S1502, the eNB 200 instructs the UE 100 to transmit a random access preamble (RA Preamble) through the L-Cell.

In Step S1503, the UE 100 performs carrier sensing for the unlicensed band.

In Step S1504, the UE 100 transmits the RA preamble to the eNB 200 through the U-Cell detected by the carrier sensing.

In Step S1505, the eNB 200 receiving the RA preamble calculates a timing difference (calculation of TA (Timing Advance)).

In Step S1506, the eNB 200 transmits a random access response (RAR) through the L-Cell to the UE 100.

Therefore, the eNB 200 can appropriately allocate the resources for transmitting the uplink resource data using the calculated timing difference with respect to the UE 100.

Further, in Step S1503, in a case where it is determined that the RA preamble cannot be transmitted at the time designated by the command signal as a result of the carrier sensing, the process of Step S1504 and the subsequent processes are stopped.

In addition, besides the method described above, the eNB 200 may estimate the UEs 100 for which the same TA (Timing Advance) can be applied to the licensed band and the unlicensed band from a measurement report for RRM (Radio Resource Management), and may select an appropriated UE 100.

In addition, as illustrated in FIG. 16, the uplink data may be avoided from being collide between the UEs 100 by simultaneously allocating one component carrier only to one UE 100. In this case, the eNB 200 notifies the resource allocation information for transmitting the uplink data (specifically, transmission timing) to the UE 100, and the UE 100 transmits the uplink data at the estimated transmission timing.

### (Transmission Power Control)

the UE 100 according to this embodiment, in response to receiving from the eNB 200, a measurement instruction of a reference signal transmitted through the second cell, estimates a path loss between the eNB 200 and the UE 100 on the basis of the reference signal, and determines an uplink transmission power used in a communication in the second cell on the basis of the path loss.

The communication control method in this embodiment includes: instructing, by the eNB 200, the UE 100 to receive a reference signal which is transmitted by the second cell; receiving, by the UE 100, the reference signal and estimating a path loss between the eNB 200 in the second cell and the UE 100 based on the reference signal; and determining, by the UE 100, transmission power at the time of transmitting uplink data based on the estimated path loss.

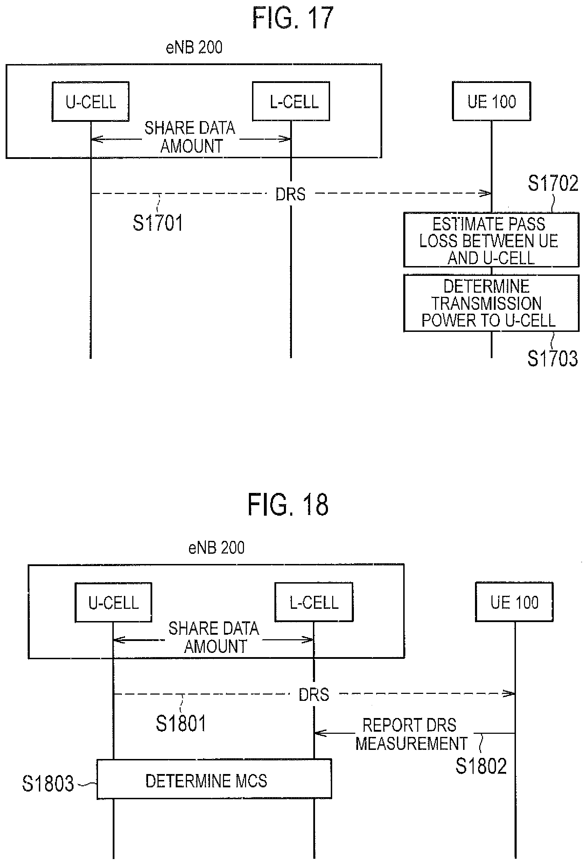

The sequence according to this embodiment will be described using FIG. 17.

In Step S1701, the UE 100 receives the DRS which is transmitted from the eNB 200 through the U-Cell.

In Step S1702, the UE 100 estimates the path loss in the U-Cell based on the received DRS or the cell specific reference signal (CRS) contained in the DRS.

In Step S1703, the UE 100 determines the transmission power necessary when the uplink data is transmitted from the estimated path loss through the U-Cell.

Through the above sequence, the transmission power can be appropriately determined in consideration of the path loss in the U-Cell.

Further, the transmission power of the DRS or the CRS contained in the DRS may be explicitly notified.

In addition, besides the method described above, the eNB 200 may estimate the UEs 100 for which the same uplink transmission power can be applied to the licensed band and the unlicensed band from the measurement report for RRM (Radio Resource Management), select an appropriate UE 100, and set the same uplink transmission power in the licensed band and the unlicensed band.

In addition, the eNB 200 may instruct the uplink transmission power to the UE 100 by the random access response (RAR) in the sequence of RACH (see Steps S1501 to S1506 of FIG. 15). Specifically, a power control command may be transmitted.

### (MCS Selection)

The eNB 200 according to this embodiment performs processes of: transmitting to the UE 100, a measurement instruction of a reference signal transmitted through the second cell (U-Cell), in response to receiving a measurement result of the reference signal from the UE 100, determining, on the basis of the reception result, an uplink modulation and coding scheme used in a communication in the second cell.

A communication control method in this embodiment includes: instructing, by the eNB 200, the UE 100 to receive a reference signal which is transmitted by the second cell; receiving, by the UE 100, the reference signal according to the instruction of the eNB 200 and reporting a reception result to the eNB 200; and determining, by the eNB 200, a modulation and coding scheme (MCS) to be applied to the second cell based on the reception result.

The sequence according to this embodiment will be described using FIG. 18.

In the sequence of FIG. 18, the description will be made on the assumption that the eNB 200 reports the reception result of the DRS to the UE 100 (DRS Config).

In Step S1801, from the eNB 200, the UE 100 receives the DRS transmitted through the U-Cell.

In Step S1802, the UE 100 reports a result of measuring the DRS or the cell specific reference signal (CRS) and/or the channel state information reference signal (CSI-RS) contained in the DRS through the L-Cell to the eNB 200.

In Step S1803, the eNB 200 determines the MCS which is applied at the time of transmitting the uplink data from the UE 100 based on the measurement result reported from the UE.

Further, the eNB 200 includes the MCS at the time of transmitting the determined uplink data in the resource allocation information for transmitting the uplink data so as to notify the MCS to the UE 100.

Through the sequence described above, it is possible to appropriately set the MCS based on the reception situation of the DRS on the U-Cell.

### [Fourth Embodiment]

Next, a fourth embodiment will be described. The same portion as those of the first embodiment to the third embodiment will not be described, and only a difference will be described.

A eNB 200 according to this embodiment, during a predetermined time period from the end of data transmission to a UE 100 in a second cell (U-Cell) to performing transmission of reference signal, stops transmission in the second cell and monitors interruption of other apparatuses in the specific frequency band.

A communication control method in this embodiment includes: receiving, by the eNB 200, a reception acknowledgement signal from the UE 100 after a downlink data is transmitted through the second cell; stopping, by the eNB 200, the transmission of a downlink wireless signal containing the downlink data for a predetermined time period (backoff time) after the reception acknowledgement signal is received through the second cell; resuming, by the eNB 200, the transmission of the reference signal after the predetermined time period elapses; and setting, by the eNB 200, the predetermined time period at random or based on a usage condition of the second cell.

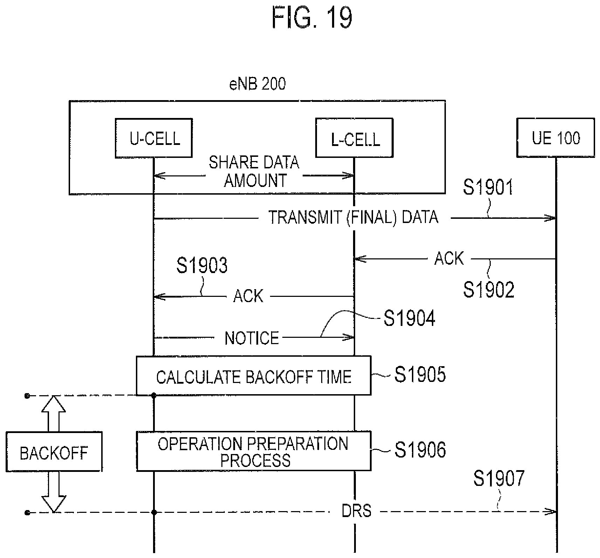

The sequence according to this embodiment will be described using FIG. 19.

In Step S1901, the UE 100 receives the final downlink data through the U-Cell from the eNB 200. For example, in Japan, it is legally restricted that the eNB 200 continuously transmits the downlink data through the U-Cell exceeding 4 ms. When 4 ms elapses after the downlink data is transmitted, the transmission is stopped once. Therefore, regarding the final downlink data in this step, it is noted that both the case of the final downlink data from the eNB 200 to the UE 100 and the case of stopping the transmission of the downlink data are included.

In Step S1902, the UE 100 transmits an acknowledgement signal (Ack) through the L-Cell to the eNB 200.

In Step S1903, an L-Cell function unit of the eNB 200 receiving the acknowledgement signal of the final downlink data from the UE 100 transmits the acknowledgement signal of the final downlink data to the U-Cell function unit of the eNB 200.

In Step S1904, a U-Cell function unit of the eNB 200 notifies the reception of the acknowledgement signal to the L-Cell function unit of the eNB 200.

In Step S1905, the eNB 200 calculates a backoff time. Here, the backoff time is a time during which the eNB 200 stops transmitting the downlink data or the reference signal through the U-Cell.

In Step S1906, the eNB 200 performs the operation preparation process for restarting the operation of the U-Cell during a period of the backoff time.

In Step S1907, the eNB 200 restarts the transmission of the DRS through the U-Cell after the backoff time elapses.

Here, the backoff time is a time provided for fairly sharing the unlicensed band with other apparatuses. The backoff time is a time for stopping the data transmission during a certain period until a certain apparatus retransmits data after the data transmission is ended.

Here, the backoff time may be selected at random, or may be determined based on a predetermined parameter (for example, a usage rate of a physical resource block (PRB) of the U-Cell).

The eNB 200 monitors an interrupt of the other apparatus during the backoff time. In a case where there is an interrupt, even after the backoff time elapses, the eNB 200 determines that a predetermined bandwidth cannot be continuously used.

During the backoff time, the eNB 200 performs preparation for transmitting the downlink data after a burst time elapses. For example, the eNB 200 transmits an activation command of the component carrier through the L-Cell to the UE 100 which is scheduled to be allocated with the uplink resource on the U-Cell after the backoff time elapses.

Through the sequence described above, it is possible to perform the preparation after the data transmission is restarted while keeping a rule of stopping the data transmission at the time of using the unlicensed band.

### [Other Embodiments]

In the embodiments described above, the description has been made about the LTE system as an example of the mobile communication system, but the application is not limited to the LTE system. The application may be applied to a system different from the LTE system.

In addition, in the embodiments described above, the description has been made about a case where the eNB 200 managing the U-Cell and the eNB managing the L-Cell are mounted on the apparatuses having the same physical configuration. However, it is a matter of course that the eNB 200 managing the U-Cell and the eNB managing the L-Cell may be mounted on the apparatuses having different physical configuration.

Sequence and the like are merely examples of embodiments of the present application and do not limit the contents of the application.

### [Appendix 1]

### (1. Introduction)

With the increasing traffic demand in the wireless communication system, additional frequencies are needed to keep providing better QoS. The use of unlicensed spectrum by cellular operators is one of the options available to provide wireless services. A new Study Item on Licensed-Assisted Access (LAA) using LTE was agreed. According to, a study is required to determine a single global solution which enhances LTE to enable licensed-assisted access to unlicensed spectrum while coexisting with other technologies and fulfilling the regulatory requirements. Due to the limitation of Rel-13 time frame, studies of unlicensed spectrum must follow the following guidelines and assumptions.

•Determine a single global solution framework for licensed-assisted access to unlicensed spectrum.

Dual Connectivity is not included in this SI.

A standalone access to unlicensed spectrum is not part of the study.

•Focus on LTE Carrier Aggregation configurations and architecture where one or more low power Scell(s) (ie., based on regulatory power limits) operates in unlicensed spectrum and is either DL-only or contains UL and DL.

In LTE Carrier Aggregation, UEs are not supposed to receive the broadcast system information on the Scell.

•Reuse the features and functionality of existing LTE design as much as possible.

In this appendix, it is discussed design targets and required functionalities of LAA using existing LTE design.

### (2. Design targets)

### High-level design of LTE Physical Layer

A straight forward way to enable licensed-assisted access to unlicensed spectrum is reusing the current LTE Physical Layer with extension and modifications to adapt various regulations in different countries or regions. Assuming this approach can keep the standardization effort to the minimum; however, it must ensure coexistence with the other already deployed unlicensed spectrum based technologies such as Wi-Fi. Another approach is to create a totally new LTE Physical Layer design (i.e., Further LTE Physical Layer Enhancements for unlicensed spectrum) with reusing the existing features as much as possible. This approach has a much better chance to get an effective LTE Physical Layer achieving a good harmonization with other unlicensed spectrum deployments. On the other hand, it may lose advantages of centrally-controlled system and may perform much worse than licensed LTE systems. Additionally, a brand new physical layer design could be very difficult to complete wthin Rel-13 time-frame. Therefore, it is proposed a LTE Physical Layer for unlicensed spectrum should be reuse the existing LTE Rel-12 design with extension to adapt regulations.

A single global solution framework
it is requested to determine a single global solution for LAA operation. Therefore, one unified LAA solution which can be meet the regulations for each country or region should be studied. Since the regulations of unlicensed spectrum are different in each country or region, it is required to design a system using the most stringent countries' and regions' regulations. e.g., Dynamic Frequency Selection (DFS), Transmit Power Control (TPC), Listen-Before-Talk (LBT) and burst transmission schemes must be considered to be incorporated to the existing physical layer design which enables LAA feature. It is necessary to further discuss if the above features are mandatory or optional.

### Coexistence with other unlicensed spectrum deployments

It is requested to define the design targets for coexistence with other unlicensed spectrum deployments. For the fairness coexistence with Wi-Fi, LAA should not impact Wi-Fi services. The fairness coexistence between different LAA operators and between LAA and other technologies in the same band is the design target as well.

### (3. Necessary enhancements)

This section discusses the necessary enhancements to achieve the above design targets from the perspective of regulations, coexistence with Wi-Fi, coexistence with other LAA services and Radio access.

### 1. Regulation

As mentioned in section 2, DFS, TPC, LBT and LTE burst transmission will be required in some countries or regions for using unlicensed spectrums. Almost all countries have requirements related to DFS and TPC for some bands. Although, these features are not supported in the existing releases it is necessary to introduce them to meet the above requirements. In addition, LBT and Burst transmission are required in Europe and Japan, which should be introduced as well.

### 2. Coexistence with Wi-Fi

### Comportment Carrier (CC) bandwidth in unlicensed spectrum

5 GHz spectrum is divided per 20 MHz bandwidth for use in Wi-Fi. It thinks CC in unlicensed spectrum should be aligned with this bandwidth for better coexistence. Note that the maximum number of aggregated CC should be 5 regardless the CC is in licensed spectrum or unlicensed spectrum. It means, if needed, up to 4 CCs in unlicensed spectrum should be aggregated at same time.

### Resource occupancy in a CC / in a LTE Burst

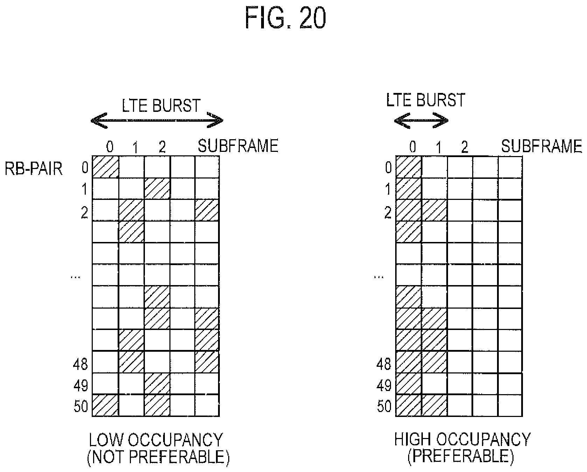

For achieving effective coexistence with Wi-Fi, Unlicensed spectrum should be used on an "on demand" basis. It's not a preferable situation that LTE use the unlicensed spectrum, but resource occupancy is quite low. (See the left figure of "Figure 20".) Therefore it should be specified the minimum resource occupancy rule in a CC in unlicensed spectrum. Also even though during ON duration in unlicensed band's CC, it should be good to create short idle periods for LTE transmission (e.g., LTE Burst) to enable Wi-Fi to interrupt on a same resources. In that case, it should be specified the minimum resource occupancy rule in a LTE Burst in unlicensed spectrum as well.

### 3. Coexistence with other LAA services

### PCI (Physical Cell ID) collision avoidance

Same PCI should not be allocated to neighbor cell. Within an operator's network, it can be achieved by cell planning or SON function. However, PCI collisions should be expected as the number of cells increases.

### Same CC sharing by more than one LAA services

There is a situation that one CC is shared by more than one LAA service. In that case more tight coordination can be achieved than the Coexistence scenario between Wi-Fi and LAA services. Both time domain and frequency domain resource sharing can be considerable. Regarding the time domain resource sharing, periodic resource sharing or burst resource sharing should be considered.

### 4. Radio access

### Synchronization between UE and Cell in unlicensed spectrum

If unlicensed spectrum is used on an "on demand" basis, it's reasonable to reuse DRS for synchronization.

Multi-Antenna transmission support and related feedbacks in unlicensed spectrum

For achieving maximum throughput, multi-antenna transmission should be supported in unlicensed spectrum band. it is believed that beamforming based technologies can be effective by not causing unnecessary interference in unlicensed spectrum. To implement multi-antenna transmission technologies in unlicensed spectrum CSI information feedback should be considered.

### HARQ protocols

HARQ ACK/NACK transmission and corresponding retransmission should be modified if LTE Burst is applied. If unlicensed spectrum is used as UL transmission, it should be discussed if synchronous HARQ design can continue to be applied.

### Scheduling and necessary feedbacks

Dynamic scheduling should be supported in unlicensed spectrum as same as in licensed spectrum. Both self-scheduling and cross carrier scheduling should be supported. If unlicensed spectrum is used on an "on demand" basis, some enhancement is needed for eNodeB to acquire necessary feedbacks from UE. Further study is needed if the existing PDCCH design is robust enough or not.

### (4. Required functionalities)

This section discusses about required functionalities corresponding to potential issues described in section 3. Since high priority should be on the completion of the DL only scenario, the required functionalities for LAA between DL only (Table 1 to Table 4) and UL specific (Table 5) are split.

**[Table 1]**

| Functionality | Description |
|---|---|
| **Regulation** | |
| DFS | Although DFS is a mandatory function for many countries or regions for unlicensed spectrum usage, thresholds for DFS requirements are not the same for each case. |
| LBT (eNodeB) | LBT is needed to meet regulations in Europe and Japan. As same as DFS, thresholds for LBT requirements are not the same for each case. If eNodeB detect higher interference than the threshold during LBT, eNodeB notice a follow-up transmission occasion cannot be used. FFS if gap for LBT should be created to keep the current structure or a new LTE Physical Layer is introduced. (One example of latter alternative is shown in Figure 2.) |
| LBT (UE) | Similar to LBT (eNodeB). The LBT threshold values must be configurable by the network or the UE learns and adapts itself. |
| TPC | Further study is needed if any function should be standardized. |
| LTE Burst length (Channel Occupancy time / Max Burst Length) | This is needed to meet regulations in Europe and Japan. For achieving gap for LBT, LTE should be enhanced to support burst transmission. The Channel Occupancy time / Max Burst Length should be introduced. Note this is also helpful in coexistence with the Wi-Fi systems. |

**[Table 2]**

| Functionality | Description |
|---|---|
| **Coexistence with Wi-Fi** | |
| Resource occupancy rule in a CC | Further study is needed if the ON/OFF duty cycle should be specified for the unlicensed spectrum for achieving effective coexistence with Wi-Fi. |
| Resource occupancy rule in a LTE Burst | Further study is needed if the minimum resource occupancy rule in a LTE Burst must be specified |
| | for achieving effective coexistence with Wi-Fi. E.g., if traffic is less than the minimum resource occupancy, unlicensed spectrum usage is not permitted by LTE. |

**[Table 3]**

| Functionality | Description |
|---|---|
| **Coexistence with other LAA services** | |
| PCI (Physical Cell ID) collision avoidance mechanism | Either UE assisted or eNodeB based PCI collision avoidance mechanism should be introduced. |
| LTE Beacon (Broadcast channel) transmission | Unlicensed spectrum usage information should be broadcasted for other operators. If DRS will be used for Synchronization in unlicensed spectrum, LTE Beacon can be transmitted along with the DRS. (see Figure 3) |
| Resource allocation rule | Further study is needed that a resource allocations rule should be standardized for achieving tight coordination when same CC sharing by more than one LAA services. |

**[Table 4]**

| Functionality | Description |
|---|---|
| **Radio access** | |
| Synchronization | Reusing DRS as baseline. Further Study is needed for eNodeB behavior if LBT is applied and eNodeB detect higher interference than the threshold during LBT. |
| Multi-antenna Transmission support and necessity feedbacks | Further study is needed which transmission modes are supported in unlicensed spectrum and how eNodeB achieve feedbacks from UE if unlicensed spectrum is used on an "on demand" basis. |
| HARQ protocols | Further study is needed for HARQ design especially when unlicensed spectrum is used on an "on demand" basis. |
| Scheduling and necessary feedbacks | Further study is needed how eNodeB acquire necessary feedbacks for dynamic scheduling from UE if unlicensed spectrum is used on an "on |
| | demand" basis. |
| Hopping | In addition to support frequency hopping in the exiting specification, further study is needed if inter-CC Hopping is effective in unlicensed band operation when eNobeB can use more than 2 CC. |

**[Table 5]**

| Functionality | Description |
|---|---|
| **Radio access** | |
| UL transmission Timing adjustment | PRACH may be introduced in unlicensed spectrum. |
| UL transmission power control | Further study is needed if it's enough to reuse the existing UL TPC mechanism. |
| UL sounding | Note there is no need to consider UL sounding if frequency domain dynamic scheduling is not supported in unlicensed spectrum. |

### [Appendix 2]

### (1. Introduction)

Study on Licensed-Assisted Access (LAA) using LTE was approved. As described in, in-device, co-channel, and adjacent channel intra-RAT and inter-RAT coexistence scenarios should be considered. In addition this SI's focus is on LTE Carrier Aggregation configurations and architecture where one or more low power Scell(s) operates in unlicensed spectrum and is either DL-only or contains both UL and DL and where the PCell operates in licensed spectrum and can be either LTE FDD or LTE TDD. This appendix considers the deployment scenarios and evaluation methodologies under the consideration of the above assumption.

### (2. Deployment scenarios)

This section considers deployment scenarios for LAA. Deployment models of this SI can be categorized into the following two models:

1) co-located cells
2) non co-located cells w/ ideal backhaul

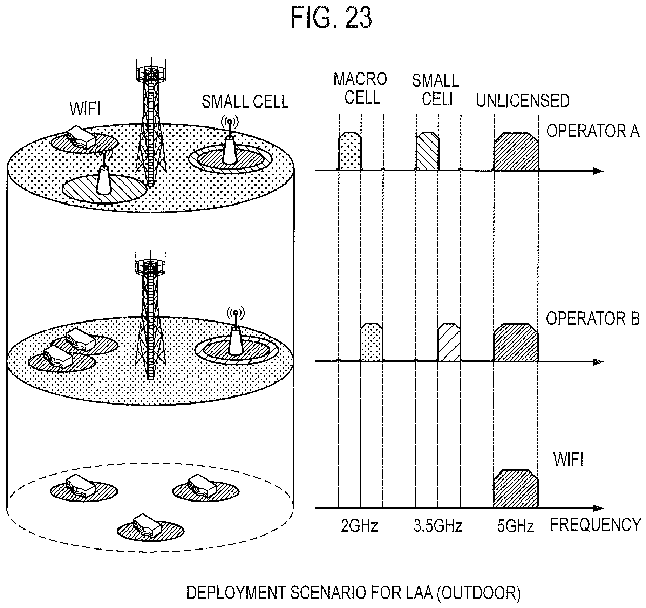

In the case where the coverage area is quite different from the licensed carrier, e.g. Macro cell and RRH unlicensed cell, it's difficult to control the unlicensed carrier on such a large coverage area. Moreover, in such case, licensed small cells should be used considering the fairness with WiFi. Therefore, it is assumed that the main scenario is that the LAA cells are co-located with small cells as shown in Figure 23. It is proposed to reuse and modify the small cell enhancement (SCE) scenarios for LAA. For example, the frequency is changed from 3.5GHz into 5GHz.

Proposal 1: The small cell enhancement (SCE) scenarios with minimum modifications should be reused for the LAA SI evaluations.

Both indoor and outdoor deployments are discussed. Therefore, it is proposed to reuse Scenario 2b for indoor deployment and Scenario 2a for outdoor deployment described in the same scenarios for the LAA SI (Table 6).

Proposal 2: Scenario 2b for indoor deployment and Scenario 2a for outdoor deployment should be used for the LAA SI evaluations.

**[Table 6]**

| Scenario | Reused from |
|---|---|
| Indoor | TR36.872[small cell] Scenario 2b |
| Outdoor | TR36.872[small cell] Scenario 2a |

### LAA cell and WiFi AP deployment

The following situations should be considered.

1) Coexistence with WiFi
2) Coexistence with different operators' LAA cells.

The cell deployment from small cell scenarios for evaluating the impact on WiFi and unlicensed band is modified. It changes small cells into LAA cells and WiFi AP and categorize into 4 patterns. Table 7 is the proposed deployment scenario. Comparing the pattern A and pattern B, it can evaluate the impact of coexistence with WiFi. Comparing Pattern C or Pattern D, it can evaluate the impact of coexistence with different operators' LAA cells.

Proposal 3: Deployment scenario for the LAA cells and WiFi APs are given in the table 7.

**[Table 7]**

| Scenario | Outdoor | | | Indoor (sparse) | | | Indoor (dense) | | |
|---|---|---|---|---|---|---|---|---|---|
| cells | WiF iAP | LAA cell (operat or A) | LAA cell (operat or B) | WiFi AP | LAA cell (operat or A) | LAA cell (operat or B) | WiFi AP | LAA cell (operat or A) | LAA cell (operat or B) |
| Pattern A | 4 | 0 | 0 | 2 | 0 | 0 | 4 | 0 | 0 |
| Pattern B | 2 | 2 | 0 | 1 | 1 | 0 | 2 | 2 | 0 |
| Pattern C | 2 | 1 | 1 | N/A | N/A | N/A | 2 | 1 | 1 |
| Pattern D | 0 | 2 | 2 | 0 | 1 | 1 | 0 | 2 | 2 |

### UE dropping scenario

It modifies the UE dropping scenario from small cell scenarios. It is proposed the total number of UEs per Wi-Fi cell and LAA cell is 10. Some of the UEs can connect to both the Wi-Fi and the LAA cells. It is proposed that the UE dropping as shown in Table 8.

Proposal 4: It is proposed to use UE dropping scenario as given in the table 8.

**[Table 8]**

| | LTE only UE | WiFi only STA | User terminal (Both LTE UE and WiFi STA) |
|---|---|---|---|
| Pattern A | - | 40(10 for each AP) | - |
| Pattern B | - | - | 20 (10 for each operator per cell) |
| Pattern C | - | - | 20 (10 for each operator per cell) |
| Pattern D | 40(10 for each operator per cell) | - | - |

### Other noted simulation conditions

Additionally, the following conditions is assumed.

1) The bandwidth is 20MHz (1CC)
2) The WiFi is IEEE802.11ac
3) 2 Tx Ant and 2 Rx Ant

### (3. Evaluation methodologies)

LAA cell should not impact WiFi services (data, video and voice services) more than an additional WiFi network on the same carrier. It is consider that performance metrics for the estimation of the fairness between the LAA and the WiFi as shown in Table 9.

**[Table 9]**

| Item | description |
|---|---|
| LTE User throughput (for each Operator) | Full buffer traffic model; mean, 5%, and CDF of user throughput. |
| LTE System throughput (for each Operator) | |
| WiFi User throughput | Full buffer traffic model; mean, 5%, and CDF of user throughput. |
| WiFi System throughput | |

For example, the impact on WiFi throughput is evaluated as follows using the above performance metrics.

1) WiFi throughput is X in case of pattern A.
2) WiFi throughput is Y in case of pattern B.

If X=< Y, then LTE-U achieves the fairness to the WiFi network.

Proposal 5: Performance metrics to be used for measuring WiFi network fairness is given in the table 9.

### [Cross references]

The entire content of U.S. Provisional Patent Application No. 62/056047 (filed on September 26, 2014) is incorporated in the present specification by reference.

### INDUSTRIAL APPLICABILITY

According to the application, it is possible to provide a communication control method which enables the specific frequency band to be used in a mobile communication.

## Claims

1. Abase station comprising:
a controller configured to manage a first cell operated using an allocation frequency band allocated by a mobile network operator and a second cell operated using a specific frequency band where occupying a frequency is not allowed by the mobile network operator, wherein
the controller set the second cell with a physical cell identifier different from a physical cell identifier of a peripheral cell operated in the specific frequency band.

2. The base station according to claim 1, wherein
the controller acquires the physical cell identifier of the peripheral cell and set the second cell with a physical cell identifier different from the acquired physical cell identifier.

3. The base station according to claim 2, wherein
the controller acquires the physical cell identifier of the peripheral cell from a mobile station existing in the first cell.

4. The base station according to claim 2, wherein
the controller acquires the physical cell identifier of the peripheral cell by searching the peripheral cell by the base station.

5. The base station according to claim 1, wherein
a physical cell identifier used for the specific frequency band includes an extended region which is extended compare to a physical cell identifier used for the allocation frequency band,
the controller set the second cell with the physical cell identifier used for the specific frequency band.

6. The base station according to claim 1, wherein
a physical cell identifier used for the specific frequency band and a physical cell identifier used for the allocation frequency band are secured individually,
the controller set the second cell with the physical cell identifier used for the specific frequency band.

7. The base station according to claim 1, wherein
in response to the controller determining, on the basis of a detection report from a mobile station or on the basis of searching by the base station, that a physical cell identifier set to the second cell and a physical cell identifier of the peripheral cell are overlapped, the controller reset the second cell with another physical cell identifier.

8. A mobile station comprising:
a controller configured to perform communication with a base station that manages a first cell operated using an allocation frequency band allocated by a mobile network operator and a second cell operated using a specific frequency band where occupying a frequency is not allowed by the mobile network operator, wherein
the controller performs processes of:
acquiring a physical cell identifier of a peripheral cell operated in the specific frequency band, and
transmitting information based on the acquired physical cell identifier to the base station.

9. The mobile station according to claim 8, wherein
the controller performs a process of transmitting, in response to an instruction from the base station, a physical cell identifier of the peripheral cell to the base station.

10. The mobile station according to claim 8, wherein
in response to the controller detecting an overlap between a physical cell identifier of the second cell and a physical cell identifier of the peripheral cell, the controller performs a process of transmitting a detection report indicating the overlap to the base station.

11. Abase station comprising:
a controller configured to manage a first cell operated using an allocation frequency band allocated by a mobile network operator and a second cell operated using a specific frequency band where occupying a frequency is not allowed by the mobile network operator, wherein
the controller performs processes of transmitting a synchronization signal used for the allocation frequency band through the first cell, and transmitting a synchronization signal used for the specific frequency band through the second cell,
a signal configuration of the synchronization signal used for the specific frequency band is different from a signal configuration of the signal used for the allocation frequency band.

12. The base station according to claim 11, wherein
the synchronization signal used for the allocation frequency band consists a first synchronization signal and a second synchronization signal, and
the synchronization signal used for the specific frequency band includes the first synchronization signal, the second synchronization signal and a specific synchronization signal used dedicated for the specific frequency band.

13. The base station according to claim 11, wherein
a predetermined resource arrangement pattern is applied to the synchronization signal used for the allocation frequency band, and
a resource arrangement pattern different from the predetermined resource arrangement pattern is applied to the synchronization signal used for the specific frequency band.

14. A mobile station comprising:
a controller configured to perform communication with a base station that manages a first cell operated using an allocation frequency band allocated by a mobile network operator and a second cell operated using a specific frequency band where occupying a frequency is not allowed by the mobile network operator, wherein
a signal configuration of the synchronization signal used for the specific frequency band is different from a signal configuration of the signal used for the allocation frequency band,
the controller specifies a synchronization signal of the second cell on the basis of the difference of the signal configurations.

15. A base station comprising:
a controller configured to manage a first cell operated using an allocation frequency band allocated by a mobile network operator and a second cell operated using a specific frequency band where occupying a frequency is not allowed by the mobile network operator, wherein
the controller allocates a plurality of component carriers included in the specific frequency band to a mobile station, and
the controller performs communication with the mobile station while switching a component carrier used in a communication with the mobile station in the second cell, with a predetermined hopping pattern.

16. Abase station according to claim 15, wherein
the controller notifies, through the first cell, the mobile station of the plurality of component carriers allocated to the mobile station and the predetermined hopping pattern.

17. Abase station according to claim 15, wherein
after the controller notifies the mobile station of a virtual component carrier number as configuration information of a component carrier allocated to the mobile station, the controller notifies the mobile station of an association between the virtual component carrier number and a component carrier that is actually used in a communication with the mobile station.

18. A base station according to claim 17, wherein
the virtual component carrier number is associated with a retransmission control process, and
the controller continues the retransmission control process associated with the virtual component carrier number even if the controller changes the component carrier that is actually used.

19. A mobile station comprising:
a controller configured to perform communication with a base station that manages a first cell operated using an allocation frequency band allocated by a mobile network operator and a second cell operated using a specific frequency band where occupying a frequency is not allowed by the mobile network operator, wherein
when a plurality of component carriers included in the specific frequency band are allocated to the mobile station, the controller performs communication with the base station while switching a component carrier used in a communication with the base station in the second cell, with a predetermined hopping pattern.

20. A base station comprising:
a controller configured to manage a first cell operated using an allocation frequency band allocated by a mobile network operator and a second cell operated using a specific frequency band where occupying a frequency is not allowed by the mobile network operator, wherein
the controller performs processes of:
transmitting to a mobile station through the first cell, an instruction signal that instructs transmission of a random access preamble through the second cell; and
notifying the mobile station, an offset value of uplink transmission timing used in a communication in the second cell, on the basis of the random access preamble received from the mobile station through the second cell.

21. The base station according to claim 20, wherein
the controller instructs the mobile station an uplink transmission power used in the communication in the second cell, at a time when notifying the mobile station of the offset value of uplink transmission timing.

22. A mobile station comprising:
a controller configured to perform communication with a base station that manages a first cell operated using an allocation frequency band allocated by a mobile network operator and a second cell operated using a specific frequency band where occupying a frequency is not allowed by the mobile network operator, wherein
the controller performs processes of:
in response to receiving, an instruction signal that instructs transmission of a random access preamble through the second cell, through the first cell, transmitting the random access preamble through the second cell; and
receiving, from the base station, an offset value of uplink transmission timing used in a communication in the second cell.

23. A mobile station comprising:
a controller configured to perform communication with a base station that manages a first cell operated using an allocation frequency band allocated by a mobile network operator and a second cell operated using a specific frequency band where occupying a frequency is not allowed by the mobile network operator, wherein
in response to receiving from the base station, a measurement instruction of a reference signal transmitted through the second cell, the controller estimates a path loss between the base station and the mobile station on the basis of the reference signal, and determines an uplink transmission power used in a communication in the second cell on the basis of the path loss.

24. A base station comprising:
a controller configured to manage a first cell operated using an allocation frequency band allocated by a mobile network operator and a second cell operated using a specific frequency band where occupying a frequency is not allowed by the mobile network operator, wherein
the controller performs processes of:
transmitting to a mobile station, a measurement instruction of a reference signal transmitted through the second cell,
in response to receiving a measurement result of the reference signal from the mobile station, determining, on the basis of the reception result, an uplink modulation and coding scheme used in a communication in the second cell.

25. Abase station comprising:
a controller configured to manage a first cell operated using an allocation frequency band allocated by a mobile network operator and a second cell operated using a specific frequency band where occupying a frequency is not allowed by the mobile network operator, wherein
during a predetermined time period from the end of data transmission to a mobile station in the second cell to performing transmission of reference signal, the controller stops transmission in the second cell and monitors interruption of other apparatuses in the specific frequency band.
